Europäisches Patentamt

European Patent Office

Office européen des brevets

(11) Numéro de publication: **0 143 134**
**A1**

# (12) DEMANDE DE BREVET EUROPEEN

(21) Numéro de dépôt: **83402304.6**

(51) Int. Cl.⁴: **B 25 J 19/00**

(22) Date de dépôt: **30.11.83**

(43) Date de publication de la demande: **05.06.85**
**Bulletin 85/23**

(71) Demandeur: **AOIP KREMLIN ROBOTIQUE, 6, rue Maryse Bastié Z.I. de Saint Guénault, F-91301 Evry Cédex (FR)**

(72) Inventeur: **Bechek, Robert Ira, 32 rue Monttessuy, F-91260 Juvisy-sur-Orge (FR)**

(74) Mandataire: **Lepeudry-Gautherat, Thérèse et al, CABINET ARMENGAUD JEUNE CASANOVA et LEPEUDRY 23 boulevard de Strasbourg, F-75010 Paris (FR)**

(84) Etats contractants désignés: **AT BE CH DE GB IT LI LU NL SE**

(54) Dispositif d'équilibrage pour bras de manipulateur.

(57) Le dispositif d'équilibrage (16) comprend un mécanisme de rappel élastique dont les ressorts (40) sont fixés d'une part sur une attache (30, 36) pivotée par une première articulation (29) sur le palier (17) et d'autre part sur une barre, par exemple en forme de T (42, 52), reliée à son extrémité inférieure sur le pendule (1) par une seconde articulation (56, 57).

Le rappel élastique est donné par la formule $R_e = K \times (E + D_o)$ où K est la raideur des ressorts (40), E l'entraxe séparant les deux articulations (29, 57), et $D_o$ une constante positive ou nulle caractéristique du pendule (1).

Application notamment à l'équilibrage des bras de manipulateurs d'automates programmables.

ACTORUM AG

La présente invention concerne un dispositif d'équilibrage d'un pendule articulé au voisinage de l'une de ses extrémités sur un support autour d'un axe horizontal, et notamment d'un bras de manipulateur comprenant un premier bras, ou bras vertical, articulé au voisinage de son extrémité inférieure autour d'un premier axe horizontal sur un support, qui se présente lui-même comme une tourelle montée pivotante sur une embase autour d'un axe vertical, et tel qu'un second bras, ou bras horizontal, est articulé au voisinage de l'une de ses extrémités sur l'extrémité supérieure du bras vertical, autour d'un second axe horizontal.

La manoeuvre du bras vertical autour du premier axe horizontal, c'est-à-dire les déplacements angulaires du bras vertical par rapport à la tourelle, et la manoeuvre du bras horizontal autour du deuxième axe horizontal, c'est-à-dire ses déplacements angulaires par rapport au bras vertical, sont commandés respectivement par un premier vérin, ou vérin d'épaule, articulé par sa tige en un point fixe du bras vertical et par son cylindre en un point fixe de la tourelle, par exemple sur une équerre portée par la tourelle et dont une partie verticale constitue le palier de pivotement du bras vertical, et par un second vérin, ou vérin de coude, articulé par sa tige en un point fixe du bras horizontal et par son cylindre en un second point fixe de la tourelle, de préférence également sur l'équerre.

Un bras de manipulateur de ce type, qui constitue un organe essentiel d'un automate programmable, est par exemple décrit dans les demandes de brevets français n° 78.20 513 et 79.19 844 relatives respectivement à un "manipulateur, en particulier automate de peinture susceptible d'apprentissage", et à un "dispositif de commande manuelle, notamment poignée pour commander les déplacements d'un organe motorisé", auxquelles on se reportera avantageusement pour obtenir d'avantage de précisions.

On sait que l'extrémité libre du bras horizontal de manipulateurs automatiques de ce type est équipée d'un outil, par exemple d'un pistolet de peinture, éventuellement par l'intermédiaire d'un mécanisme d'articulation élaboré, afin que l'outil puisse prendre pratiquement toute orientation souhaitée dans l'espace, et qu'en fonctionnement automatique, le bras de manipulateur déplace l'outil dans trois directions perpendiculaires grâce aux pivotements de la tourelle et des deux bras motorisés respectivement par un moteur logé dans l'embase et par les deux vérins, selon une séquence préalablement enregistrée. Cet enregistrement préalable peut être réalisé, comme cela est décrit dans la demande de brevet français 79.19 644 précitée, en déplaçant manuellement le bras manipulateur à l'aide d'une poignée de commande manuelle montée sur le bras horizontal à une faible distance de l'extrémité libre de ce dernier qui porte l'outil, de sorte qu'un même opérateur puisse saisir de sa main droite une partie à manoeuvrer de l'outil, par exemple la crosse du pistolet de peinture, et de sa main gauche la poignée de commande manuelle. La séquence des déplacements manuels est enregistrée et peut être reproduite ensuite automatiquement par le bras de manipulateur motorisé de l'automate programmable.

En raison de la structure du bras de manipulateur, et afin que l'axe d'articulation du bras vertical sur la tourelle ne soit sollicité que par une force, dont la direction d'action passe par cet axe, et non par un couple, il est connu d'équiper l'extrémité supérieure du bras vertical, par laquelle ce dernier est articulé sur le bras horizontal, d'un tendeur relié à un troisième point fixe de la tourelle par une bielle de longueur constante, de façon à définir avec le bras vertical et la tourelle un parallélogramme déformable, dont un côté, constitué par le tendeur, est relié à un point fixe du bras horizontal par un dispositif de rappel élastique comprenant au moins un ressort longitudinal de traction, qui assure un équilibrage convenable du bras horizontal par rapport à son articulation sur le bras vertical.

3          0143134

De manière analogue, il est connu d'équiper le bras vertical d'un dispositif d'équilibrage qui comprend un mécanisme
de rappel élastique constitué le plus souvent de deux ressorts de traction, dont chacun est articulé par l'une de
ses extrémités à un point fixe de la partie médiane du
bras vertical et par l'autre extrémité à un palier du dispositif d'équilibrage, ce palier étant généralement vertical, de forme triangulaire et fixé sur la tourelle, de
sorte que le point d'articulation du ressort sur ce palier
soit situé au-dessus du premier axe horizontal d'articulation du bras vertical sur la tourelle, dans un plan vertical
passant par cet axe horizontal.

Mais si l'on trace les courbes donnant en ordonnées le couple dû au poids du bras de manipulateur équipé
ainsi que le couple dû aux effets des ressorts du dispositif d'équilibrage du bras vertical, en fonction de l'angle
θ d'inclinaison du bras vertical sur la direction verticale
indiqué en abscisses, on constate que la courbe du couple
du bras de manipulateur présente une concavité tournée vers
l'axe des abscisses, alors que celle du couple des ressorts
présente une concavité tournée vers l'axe des ordonnées, et
que ces courbes se coupent en un seul point, qui correspond
effectivement à une position d'équilibre. De part et d'autre
de ce point, les effets des ressorts sont soit trop forts
soit trop faibles,  et le bras de manipulateur n'est donc
pas convenablement équilibré.

Compte tenu du poids d'un bras de manipulateur
équipé, le déplacement manuel de ce dernier, par action sur
une poignée de commande manuelle prévue pour l'enregistrement
d'une séquence de fonctionnement, n'est pas une opération
aisée.

C'est la raison pour laquelle l'enregistrement
préalable de la séquence de fonctionnement est souvent réalisé avec un ensemble articulé ayant globalement la même
géométrie que le bras de manipulateur, mais bien plus léger
que ce dernier  afin de pouvoir  être  plus
aisément déplacé manuellement pour l'exécution de la séquence

4    0143134

à enregistrer. Un tel ensemble articulé, appelé syntaxeur, constitue en fait un double allégé du bras manipulateur, qui doit être utilisé chaque fois que l'on souhaite programmer le bras de manipulateur pour une nouvelle séquence, en vue d'une nouvelle application ou d'un nouveau travail.

Cette seconde solution, dans laquelle il n'est pas nécessaire de déplacer manuellement les bras de manipulateur très imparfaitement équilibrés, a pour inconvénient d'être coûteuse, en raison du syntaxeur.

La présente invention a pour but de réaliser un dispositif d'équilibrage destiné à équiper un pendule, et en particulier un bras de manipulateur, et tel que la courbe de son couple puisse être pratiquement superposée ou tout au moins très sensiblement rapprochée de celle du couple du pendule ou du bras de manipulateur.

On sait que, pour un pendule idéal incliné d'un angle $\theta$ sur la verticale, le couple $M_b$ dû au poids W du pendule, dont le centre de gravité est situé à une distance Z de l'axe d'articulation du pendule sur son support, est donné par la formule :

$$M_b = ZW \text{ sinus } \theta$$

ce qui correspond à une courbe pratiquement rectiligne. Le couple $M_o$ dû à un ressort d'équilibrage de raideur K, dont la force de rappel élastique est $R = K \times (E - D_o)$, où E est l'entraxe séparant les deux articulations du dispositif et $D_o$ est une constante positive normalement correspondant à la longueur libre du ressort, est donné par la formule :

$$M_o = K \times a \times b \times \left(\frac{E - D_o}{E}\right) \times \text{sinus } \theta$$

où a et b sont les entraxes séparant l'articulation du pendule sur son support respectivement de l'articulation du ressort sur le pendule et de l'articulation du ressort sur le palier du dispositif d'équilibrage.

Pour qu'il y ait équilibre, il faut que $M_b = M_o$, c'est-à-dire que : $D_o = E \times \left(1 - \frac{ZW}{Kab}\right)$ avec

$$E = (a^2 + b^2 - 2ab \text{ cosinus } \theta)^{1/2}.$$

Mais en raison des liaisons du bras vertical et du bras horizontal avec le support par l'intermédiaire de la biellette et du tendeur ainsi que des vérin d'épaule et de coude, un bras de manipulateur tel que présenté ci-dessus ne se comporte pas exactement comme un pendule idéal.

Dans ces conditions, pour l'équilibrage on obtient $D_o = E \times (1 - \frac{M'_b}{Kab \quad sinus \; \theta})$, où $M'_b$ est le couple dû au poids du bras de manipulateur par rapport à son axe d'articulation sur son support. Mais en pratique, la valeur $D_o$ donnée par l'une des formules données ci-dessus est toujours négative, ce qu'il n'est pas possible de réaliser avec les systèmes existants.

L'invention a pour objet un dispositif d'équilibrage d'un pendule, idéal ou réel tel qu'un bras de manipulateur, articulé par l'une de ses extrémités sur un support autour d'un axe horizontal, ce dispositif comprenant un mécanisme de rappel élastique muni d'au moins un ressort et monté entre deux articulations, dont une première est fixée sur un palier du dispositif et sensiblement dans un plan vertical passant par l'axe horizontal d'articulation du pendule sur son support, et dont la seconde est fixée sur le pendule, et se caractérise en ce que le mécanisme de rappel élastique exerce constamment sur le pendule une force de rappel élastique $R_e$ telle que $R_e = K \times (E + D_o)$, où K est la raideur du ressort et E l'entraxe séparant les deux articulations du dispositif, et $D_o$ est une constante positive ou nulle, qui équilibre le pendule en fonction de la position des deux articulations, du poids du pendule et de la position de son centre de gravité, alors que dans les dispositifs classiques connus, $D_o$ est toujours une constante négative. Pour un pendule idéal, la première articulation est exactement située dans le plan vertical passant par l'axe horizontal d'articulation du pendule sur son support, en dessous ou au-dessus de cet axe horizontal selon que le pendule est articulé sur son support respectivement par son extrémité supérieure, et donc suspendu, ou par son extrémité inférieure, et non suspendu, et $D_o$ est choisie positive ou nulle selon la première formule présentée ci-dessus.

Pour un pendule réel comme un bras de manipulateur, par exemple, la position de la première articulation et le choix de $D_o$ correspondent sensiblement à ce qui a été indiqué ci-dessus.

Si l'on choisit $D_o$ = 0, la courbe du couple du dispositif d'équilibrage en fonction de l'inclinaison du pendule sur la verticale est presque rectiligne, et peut donc être rapprochée de ou superposée à celle du couple dû au poids du pendule.

Si l'on choisit $D_o$ > 0, la courbe du couple du dispositif d'équilibrage présente une concavité tournée vers l'axe des abscisses, comme cela est le cas de la courbe du couple dû au poids d'un bras de manipulateur, et ces deux courbes peuvent donc être rapprochées sinon superposées.

Selon l'invention, si le pendule pivote sur son extrémité inférieure, et n'est donc pas suspendu, le mécanisme de rappel élastique assure un rappel en traction, alors que si le pendule pivote sur son extrémité supérieure, en position suspendue le mécanisme de rappel élastique assure un rappel en compression.

Dans une première forme de réalisation, assurant une bonne protection du ou des ressorts du dispositif, le mécanisme de rappel élastique comprend une tige de support, dont une première extrémité est montée pivotante par la première articulation sur le palier du dispositif, autour d'un premier axe horizontal, et qui traverse le fond d'un cylindre monté pivotant par la seconde articulation sur le pendule, autour d'un second axe horizontal parallèle au premier, et la tige est telle que sa seconde extrémité est fixée à un piston monté coulissant dans le cylindre, dans lequel au moins un ressort de compression ou de traction, selon que le pendule n'est pas ou est suspendu, est disposé entre le piston et le fond du cylindre.

Si le pendule est un bras de manipulateur dont le poids est relativement important, il est alors avantageux que le dispositif comprenne deux ressorts coaxiaux et hélicoïdaux à pas inversés, montés l'un dans l'autre autour de la tige de support entre le piston et le fond du cylindre.

La première articulation peut comprendre un premier pivot solidaire du palier du dispositif, et autour duquel est montée pivotante une première bague à laquelle la première extrémité de la tige de support est solidarisée, et la seconde articulation peut comprendre un second pivot solidaire du pendule, et autour duquel est montée pivotante une seconde bague à laquelle le fond du cylindre est solidarisé.

Dans une seconde forme de réalisation, particulièrement simple et convenant à l'équipement de bras articulés à faible poids, tels que les syntaxeurs, le mécanisme de rappel élastique comprend au moins un ressort de traction ou de compression, selon que le pendule n'est pas ou est suspendu, pouvant être faiblement taré, dont une première extrémité est fixée à une patte d'attache montée pivotante par la première articulation sur le palier du dispositif autour d'un premier axe horizontal, et une tige de support, montée pivotante en un premier point fixe par la seconde articulation sur le pendule, autour d'un second axe horizontal parallèle au premier, et telle que la seconde extrémité du ou des ressorts est fixée à un second point fixe de la tige de support, disposé de sorte que le second axe horizontal soit situé entre le premier axe horizontal et le second point fixe.

Avantageusement dans ce cas, afin que le dispositif soit plus stable, la tige de support a la forme d'une barre en T qui pivote sur le pendule par l'extrémité inférieure de la tige longitudinale du T et dont les deux extrémités de la barre transversale du T sont chacune fixées à la seconde extrémité de l'un de deux ressorts, qui sont disposés sensiblement symétriquement d'un côté et de l'autre de la tige longitudinale du T, et dont les premières extrémités sont fixées chacune à l'une des extrémités d'une barre transversale de la patte d'attache, également en forme de T, et qui pivote sur le palier du dispositif par l'extrémité inférieure de son élément longitudinal.

La stabilité du dispositif est encore accrue s'il comprend un stabilisateur comportant une plaque solidarisée par une première extrémité sur la patte d'attache, et qui s'étend parallèlement à la tige longitudinale de la barre en T de manière à recouvrir la seconde articulation et au moins en partie cette tige longitudinale, et la plaque stabilisatrice porte un élément de guidage que traverse la tige longitudinale.

Dans une forme particulièrement simple de réalisation, l'élément de guidage est un coulisseau solidaire de la seconde extrémité de la plaque stabilisatrice et monté glissant sur la tige longitudinale.

Avantageusement, afin de permettre un réglage du dispositif en fonction des tolérances de fabrication des ressorts ainsi que pour compenser les variations de poids de l'outil dont peut être équipé le bras de manipulateur, la tige de support du dispositif d'équilibrage selon l'invention est une tige de longueur utile réglable.

Dans un dispositif à cylindre, tel que présenté ci-dessus, on peut avantageusement utiliser une tige de support dont la seconde extrémité est filetée et traverse le piston, auquel la tige de support est fixée par un écrou qui est vissé sur cette extrémité filetée et permet de régler la longueur utile de la tige de support.

Par contre, dans un dispositif dont la tige support est une barre en forme de T, la tige longitudinale du T peut comprendre deux éléments dans le prolongement l'un de l'autre, et dont les extrémités en regard sont filetées et reçues chacune dans l'un de deux alésages taraudés d'extrémité d'un manchon de réglage, de sorte que la rotation du manchon dans l'un ou l'autre sens commande l'éloignement ou le rapprochement l'une de l'autre des deux extrémités en regard, reçues dans le manchon, des deux éléments de la tige longitudinale, dont la longueur utile est ainsi réglée.

Pour tenir compte des tolérances de fabrication des différents composants du dispositif ainsi que pour tenir compte des jeux de montage, il est avantageux que, dans toutes les formes de réalisation du dispositif selon l'invention, la position de la première et/ou de la seconde articulation respectivement sur le palier et sur le pendule, soit réglable. Ceci permet d'ajuster la valeur des entraxes a et b présentés ci-dessus. Dans une forme particulièrement simple de réalisation , ceci est obtenu en solidarisant le pivot de la seconde articulation sur le pendule par l'intermédiaire d'un patin monté coulissant sur une embase longitudinale fixée au pendule et sur laquelle le patin est destiné à être immobilisé en position voulue par un mécanisme de serrage. Ce montage permet d'ajuster la valeur de l'entraxe a séparant l'articulation du pendule sur son support de l'articulation de la tige de support du dispositif sur le pendule.

Lorsque le pendule est un bras de manipulateur, compte tenu de la dissymétrie présentée par ce dernier par rapport à l'axe horizontal d'articulation du bras vertical sur le support, la courbe du couple dû au poids du pendule n'est pas symétrique par rapport à l'axe des ordonnées et présente un décalage du zéro. C'est-à-dire que le couple n'est pas nul lorsque le bras vertical du bras de manipulateur est en position verticale. Afin de compenser ce décalage du zéro, le palier du dispositif selon l'invention comprend une partie supérieure, portant la première articulation et qui est montée réglable en position angulaire sur une partie inférieure fixée au support du pendule. La partie supérieure du palier, qui peut être montée en rotation sur la partie inférieure autour d'un pivot, est immobilisée dans la position angulaire souhaitée par rapport à la partie inférieure par un mécanisme de serrage.

Enfin, afin de compenser des défauts d'alignement de faces assemblées d'éléments du dispositif, il est préférable que l'une des articulations soit une articulation à deux degrés de liberté, c'est-à-dire équipée par exemple d'une rotule ou d'un roulement à billes convenable.

La présente invention a également pour objet tout pendule, notamment tout bras de manipulateur, articulé par l'une de ses extrémités sur un support autour d'un axe horizontal, et équipé d'au moins un dispositif d'équilibrage du type faisant l'objet de la présente invention.

La présente invention sera mieux comprise à l'aide d'exemples particuliers de réalisation, qui seront décrits ci-après, à titre non limitatif, en référence aux dessins annexés dans lesquels :

la figure 1 est une vue en élévation latérale schématique d'un bras de manipulateur d'un automate de peinture programmable, équipé d'un dispositif d'équilibrage conforme à une première variante de réalisation;

la figure 2 est une vue à plus grande échelle du dispositif d'équilibrage équipant le bras de manipulateur représenté sur la figure 1;

la figure 3 est une vue en coupe selon la ligne III-III de la figure 2;

la figure 4 est une vue analogue à la figure 2 pour une position très inclinée sur la verticale du bras vertical du bras de manipulateur; et

la figure 5 est une vue analogue à la figure 3 d'une deuxième variante de réalisation du dispositif d'équilibrage.

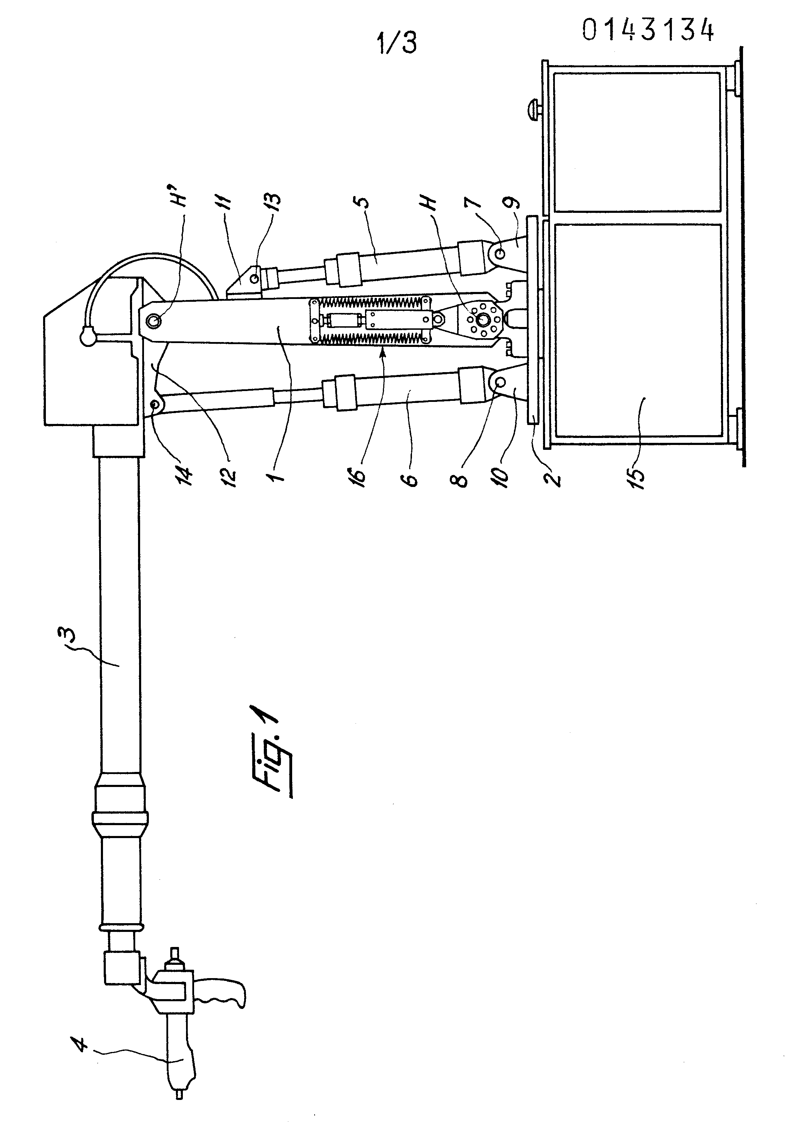

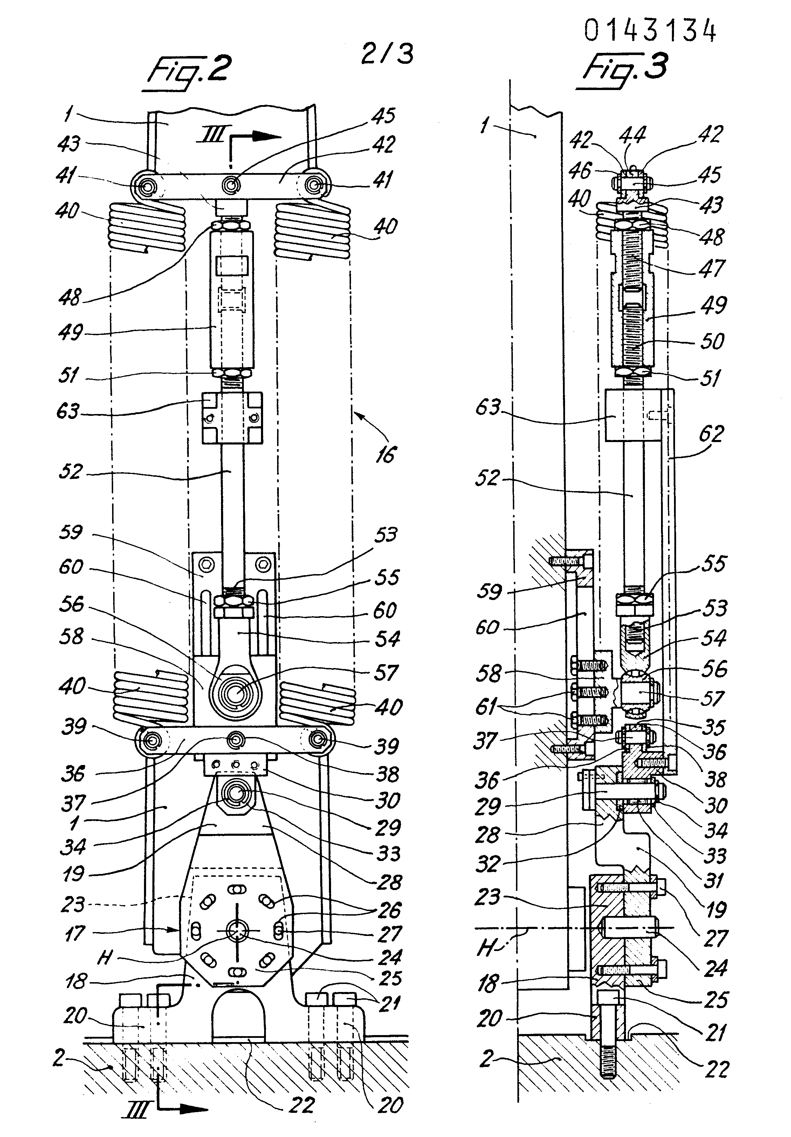

La figure 1 représente un bras de manipulateur d'automate de peinture programmable, qui comprend un premier bras, appelé également bras vertical 1, monté pivotant par son extrémité inférieure sur une tourelle 2 autour d'un axe horizontal H, qui apparaît plus clairement sur la figure 3, et par l'intermédiaire d'un palier non représenté pour plus de clarté et pour éviter toute confusion avec le palier du dispositif d'équilibrage décrit ci-après. Sur l'extrémité supérieure du premier bras 1 est montée pivotante, autour d'un autre axe horizontal H' parallèle à l'axe H, une extrémité d'un second bras, appelé encore bras horizontal 3, dont l'autre extrémité, libre, porte un pistolet de peinture 4. Les pivotements du premier bras 1 autour de l'axe horizontal H d'articulation sur la tourelle 2 et du deuxième bras 3 autour de l'axe horizontal H' d'articulation sur le premier bras 1 sont respectivement commandés par un premier vérin hydraulique 5, appelé également vérin d'épaule, et par un second vérin hydraulique 6, appelé également vérin de coude. Les vérins 5 et 6 sont montés pivotants par l'extrémité inférieure de leur cylindre sur la tourelle 2, respec-

11   0143134

tivement autour d'axes 7 et 8 horizontaux et parallèles à l'axe H, par l'intermédiaire d'attaches 9 et 10 solidaires de la tourelle 2, et par l'extrémité supérieure de leur tige respectivement sur une attache 11 du premier bras 1 et une attache 12 du second bras 3, autour d'axes horizontaux 13 et 14 parallèles aux axes H et H'. La tourelle 2 est elle-même montée pivotante sur une embase 15, autour d'un axe vertical, qui correspond à l'axe longitudinal du premier bras 1 lorsque ce dernier est vertical, et l'embase 15 renferme notamment un moteur d'entraînement de la tourelle 2 en rotation ainsi qu'un circuit hydraulique d'alimentation des vérins 5 et 6, un circuit d'alimentation en peinture du pistolet 4, et des circuits électroniques et/ou électromécaniques de commande appropriés, pour commander les déplacements du pistolet 4 dans trois directions perpendiculaires. Un dispositif d'équilibrage 16 est disposé sensiblement le long du premier bras 1, lorsque ce dernier est en position verticale, et ce dispositif 16 est plus précisément décrit ci-après en référence aux figures 2 à 4.

Le dispositif d'équilibrage 16 comprend un palier 17, constitué d'une partie inférieure 18 et d'une partie supérieure 19. La partie inférieure 18 présente deux pattes latérales de fixation 20, dans le prolongement l'une de l'autre et solidarisées par des boulons 21, vissés dans la tourelle 2, contre la face supérieure plane et rectifiée d'une rainure 22 usinée dans la face supérieure plane de la tourelle 2 perpendiculairement à l'axe horizontal H, ainsi qu'une portion centrale surélevée 23, à face extérieure (non tournée vers le premier bras 1) plane, dans laquelle est monté en rotation autour de l'axe horizontal H d'articulation du premier bras 1 sur la tourelle 2, un pivot 24 sur lequel est montée une portion polygonale 25 inférieure de la partie supérieure contre-coudée 19 du palier 17. Une couronne de 8 alésages taraudés ménagés dans la portion centrale 23 de la partie inférieure 18 ainsi qu'une couronne de 8 lumières 26 allongées, en forme d'ovale courbe, et pratiquées dans la portion inférieure 23 de la partie supérieure 19,
entourent le pivot 24, de sorte que la partie supérieure 19
puisse être immobilisée contre la partie inférieure 18 avec
une position angulaire souhaitée, par des vis de serrage 27
dont les tiges traversent les lumières 26 et sont vissées dans
les alésages taraudés de la moitié inférieure 18, et dont
les têtes sont appliquées contre la partie supérieure 19
par l'intermédiaire de rondelles d'appui.

Sur la portion supérieure en retrait 28 de la
partie supérieure 19, un pivot 29 d'axe horizontal parallèle à l'axe H est immobilisé en rotation, et un noyau central 30, monté pivotant par sa partie inférieure autour du
pivot 29, par l'intermédiaire d'un roulement à aiguilles
31, est retenu contre une bague anti-frottement 32 logée
dans un lamage de la portion 28 par une rondelle 33 et un
circlip 34. Le noyau 30 présente également une partie amincie
35 en saillie au-dessus de sa surface supérieure, et deux
plaques transversales 36 appliquées à la fois contre la
surface supérieure du noyau 30 et contre la partie amincie
35, de part et d'autre de cette dernière, sont retenues sur
le noyau 30 par un axe 37 traversant des alésages centraux
alignés percés dans la partie amincie 35 et dans les plaques transversales 36, et retenu en position par deux circlips 38 de part et d'autre des plaques 36.

A leurs deux extrémités, les deux plaques transversales 36 sont réunies l'une à l'autre par des axes 39
également retenus en position par des circlips, et sur chacun des axes 39 est accrochée l'extrémité inférieure d'un
ressort hélicoïdal de traction 40, dont l'extrémité supérieure est accrochée de manière analogue sur l'un de deux
axes 41, analogues aux axes 39, réunissant les extrémités
de deux plaques transversales 42 analogues aux plaques transversales 36.

Par leurs parties médianes, les deux plaques 42
sont appliquées à la fois contre la surface supérieure d'un
embout 43 et contre les faces latérales d'une partie amincie
44, en saillie au-dessus de l'embout 43. Les pattes 42 sont

---

13    0143134

maintenues en position par un axe 45 traversant des alésages alignés percés dans les plaques transversales 42 et dans la partie amincie 44, et deux circlips 46 montés sur l'axe 45 de part et d'autre des plaques 42. L'embout 43 se prolonge en direction du palier 17 par une tige filetée 47, sur laquelle est vissé un écrou 48 et elle-même vissée dans un premier alésage taraudé de l'extrémité supérieure d'un manchon 49 présentant également à son extrémité inférieure un second alésage taraudé dans lequel est vissée l'extrémité supérieure filetée 50, sur laquelle est vissé un écrou 51, d'une tige 52 dont l'extrémité inférieure filetée 53 est vissée dans un alésage taraudé de l'extrémité supérieure d'un embout à rotule 54.

Les taraudages des extrémités supérieure et inférieure du manchon 49 et les filetages de la tige 47 et de l'extrémité supérieure 50 de la tigue 52 sont ainsi réalisés, qu'une rotation dans un sens ou dans l'autre du manchon 49, dont la surface externe présente des plats destinés à l'entraînement en rotation au moyen d'une clef adaptée, commande le rapprochement ou l'éloignement l'une de l'autre des extrémités en regard dans le manchon 49 des tiges 47 et 52, lorsque les écrous 48 et 51 de blocage du manchon 49 ne sont pas serrés contre ce dernier. On réalise ainsi une tige longitudinale de longueur réglable, maintenue à une longueur choisie par le serrage des écrous 48 et 51 contre le manchon 49. De plus, un contre-écrou 55, vissé sur l'extrémité inférieure filetée 53 de la tige 52, permet également de bloquer cette dernière dans une position choisie par rapport à l'embout 54.

La rotule 56 de l'embout 54 est montée en rotation autour d'un axe horizontal parallèle à l'axe H sur un pivot 57 porté par un patin 58.

Le patin 58 est monté coulissant sur une glissière longitudinale 59 vissée sur le premier bras 1 du manipulateur et présentant deux ouvertures longitudinales 60. Le patin 58 est immobilisé en position désirée sur la glissière 59 par le serrage de vis 61 dont les tiges traversent les ouvertures 60 et sont vissées dans des alésages taraudés du patin 58, et dont les têtes sont serrées contre la glissière 59.

Enfin, une plaque stabilisatrice 62, vissée par son extrémité inférieure sur le noyau central 30, porte à son extrémité supérieure un coulisseau de guidage 63 monté glissant sur la tige 52.

Le dispositif d'équilibrage 16 ainsi constitué et monté sur le premier bras 1 du manipulateur comprend donc un palier 17 sur lequel est monté un mécanisme de rappel élastique. Ce dernier comprend deux ressorts de traction 40 fixés d'une part sur la barre transversale, constituée par les plaques 36, d'une patte d'attache en forme T pivotant par l'extrémité inférieure de son élément longitudinal, constitué par le noyau 30, sur le palier 17 par une première articulation constituée par le pivot 29, et les ressorts 40 sont fixés d'autre part sur la barre transversale, constituée par les plaques 42, d'une tige support en forme de T articulée sur le premier bras 1 par une seconde articulation, constituée par la rotule 56 et le pivot 57, au niveau de l'extrémité inférieure de la tige longitudinale de cette tige support en forme de T.

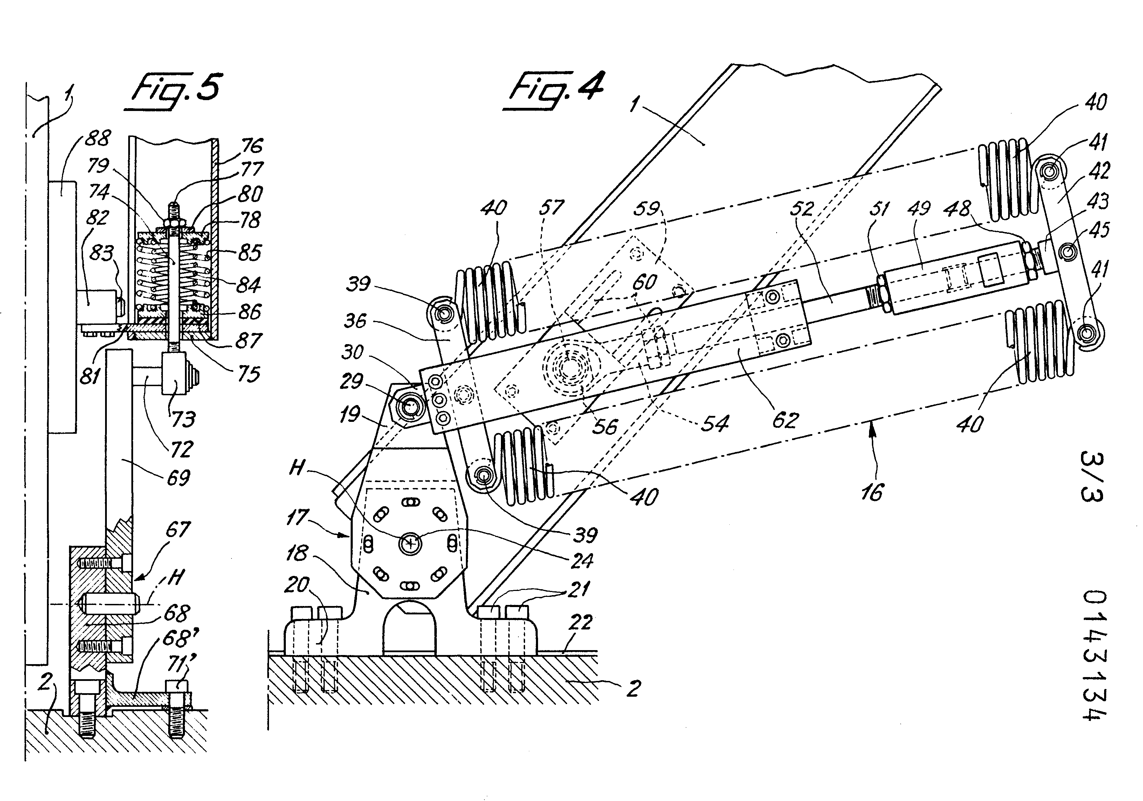

En fonction des entraxes a et b, séparant l'axe H respectivement des axes des pivots 57 et 29, et de la raideur K des ressorts 40, on choisit la constante positive ou nulle $D_o$, suivant les formules précitées, compte tenu du poids et de la position du centre de gravité du bras de manipulateur. Lorsque le premier bras 1 est incliné sur la verticale, comme représenté sur la figure 4, le mécanisme de rappel élastique s'incline également d'une valeur différente, qui dépend de sa géométrie, de sorte que le couple dû au poids du bras de manipulateur soit équilibré par le couple du mécanisme de rappel élastique du dispositif d'équilibrage 16. Les basculements du mécanisme de rappel élastique sont stabilisés par la plaque 62, qui recouvre et protège la seconde articulation rotulée et la majeure partie de la tige 52, et par son coulisseau 63.

Les variations de la raideur K des ressorts 40, résultant des tolérances de fabrication des ressorts, ainsi que les variations du poids du manipulateur, résultant du changement de pistolet de peinture 4 par exemple, peuvent être compensées par action sur le manchon 49, afin de faire varier la longueur utile de la tige longitudinale de la barre en forme de T, ce qui modifie les caractéristiques du rappel élastique des ressorts 40 de manière correspondante.

L'articulation à rotule 56 et pivot 57, à deux degrés de liberté, permet de compenser les défauts d'alignement et de planéité des faces d'appui de la plaque stabilisatrice 62 contre le noyau 30 de la première articulation et contre le coulisseau 63 glissant sur la tige 52.

On peut enfin ajuster l'entraxe a à une valeur souhaitée, en déplaçant le pivot 57 et le patin 58 sur la glissière 59, sur une certaine course le long du premier bras 1 du manipulateur.

Enfin, pour compenser le décalage de zéro des courbes du couple en fonction de l'inclinaison, qui résulte de la dissymétrie du bras de manipulateur par rapport à l'axe H, on peut positionner convenablement la première articulation en faisant pivoter le pivot 29 avec la partie supérieure 19 du palier 17 sur la partie inférieure 18 de ce dernier.

Il est à noter qu'au lieu d'ajuster l'entraxe a, il est également possible d'ajuster l'entraxe b en déplaçant longitudinalement le pivot 29 sur la partie supérieure 19 du palier 17. En effet, le réglage de l'un ou de l'autre des deux entraxes a et b produit le même effet.

On a schématiquement représenté sur la figure 5 un second exemple de réalisation d'un dispositif d'équilibrage, dont le palier 67 comprend également une partie inférieure 68 et une partie supérieure 69. La partie inférieure 68 est identique à la partie inférieure 18 précédemment décrite, avec la seule différence qu'elle présente en plus une patte d'appui transversale 68' fixée sur la tourelle 2 par des vis 71'. Comme précédemment, le calage angulaire de la partie 69, montée en rotation sur la partie 68 autour de l'axe H, peut être ajusté par des vis de serrage coopérant avec des lumières. L'extrémité supérieure de la partie 69 porte un pivot 72 sur lequel est montée pivotante autour d'un axe horizontal parallèle à l'axe H une bague 73, dans laquelle est vissée, de manière réglable, l'extrémité inférieure filetée d'une tige 74 qui traverse le fond 75 d'un cylindre 76. L'extrémité supérieure filetée 77 de la tige 74 traverse un piston 78 monté coulissant dans le cylindre 76 et sur lequel elle est fixée de manière réglable par un écrou 79 et une rondelle 80.

Le fond 75 du cylindre 76 est fixé par une plaque 81 sur une bague 82 montée pivotante sur un pivot 83 autour d'un axe horizontal parallèle à l'axe H. Deux ressorts de compression 84 et 85, hélicoïdaux, coaxiaux, à pas inversés et montés l'un dans l'autre, sont disposés autour de la tige 74 entre le piston 78 et un second piston 86 appliqué par les ressorts contre une couche 87 d'un matériau amortisseur de chocs et de vibrations (et éventuellement phonique) montée dans le fond du cylindre 76. Le pivot 83 est porté par un patin (non représenté) monté coulissant sur une glissière longitudinale 88 fixée au premier bras 1 du manipulateur, de manière analogue au montage décrit précédemment dans le premier exemple de réalisation.

Ce dispositif d'équilibrage présente donc également un palier 67 et un mécanisme de rappel élastique en traction, comprenant dans ce cas deux ressorts 84 et 85 de compression, et articulé par l'extrémité inférieure de la tige 74 et la bague 73 sur le palier 67, par une première articulation (pivot 72), et par le fond 75 du cylindre 76 et la bague 82 sur le premier bras 1 du manipulateur, par une seconde articulation (pivot 83).

En ce qui concerne la raideur K des ressorts 84 et 85, la compensation des tolérances de fabrication de ces ressorts et les variations de poids résultant des changements de l'équipement du bras de manipulateur, ainsi que les entraxes a et b séparant l'axe H respectivement des axes des pivots 83 et 72, et la position angulaire de la première articulation (pivot 72), les mêmes réglages que précédemment sont permis.

Dans les deux exemples de réalisation décrits ci-dessus le montage des ressorts est tel qu'il permet d'obtenir une constante $D_o \geqslant o$, telle que donnée par les formules précitées.

Les dispositifs d'équilibrage selon l'invention, susceptibles d'équiper les syntaxeurs, sont plus particulièrement destinés à équiper les bras de manipulateur, de sorte que les déplacements manuels des bras au moyen d'une poignée de commande, soient grandement facilités, et que l'utilisateur puisse faire l'économie d'un syntaxeur pour l'enregistrement des séquences de fonctionnement.

<u>REVENDICATIONS</u>

1.      Dispositif d'équilibrage d'un pendule, notamment d'un bras de manipulateur (1, 3) articulé par l'une de ses extrémités sur un support (2) autour d'un axe horizontal (H), et qui comprend un palier (17, 67) et un mécanisme de rappel élastique muni d'au moins un ressort (40, 84, 85) et monté pivotant par une première articulation sur le palier (17, 67) sensiblement dans un plan vertical passant par l'axe (H) d'articulation du pendule (1, 3) sur son support (2), et par une seconde articulation sur le pendule (1, 3), caractérisé en ce que le mécanisme de rappel élastique exerce constamment sur le pendule (1, 3) une force de rappel élastique ($R_e$) telle que :

$$R_e = K \times (E + D_o)$$

où K est la raideur du ressort (40, 84, 85),

    E est l'entraxe séparant les deux articulations du dispositif et

    $D_o$ une constante positive ou nulle qui équilibre le pendule (1, 3) en fonction de la position des deux articulations, du poids du pendule et de la position de son centre de gravité.

2.      Dispositif selon la revendication 1, caractérisé en ce que le mécanisme de rappel élastique comprend une tige de support (74), dont une première extrémité est montée pivotante par la première articulation (72, 73) sur le palier (67) autour d'un premier axe horizontal, et qui traverse le fond (75) d'un cylindre (76) monté pivotant par la seconde articulation (82, 83) sur le pendule (1, 3) autour d'un second axe horizontal parallèle au premier, et telle que la seconde extrémité de la tige (74) est fixée à un piston (78) monté coulissant dans le cylindre (76) dans lequel au moins un ressort (84, 85) de compression ou de traction, selon que le pendule (1, 3) n'est pas ou est suspendu, est disposé entre le piston (78) et le fond du cylindre (76).

3.      Dispositif selon la revendication 2, caractérisé en ce qu'il comprend deux ressorts (84, 85) coaxiaux et hélicoïdaux, à pas inversés, montés l'un dans l'autre autour de la tige (74) de support, entre le piston (78) et le fond (75) du cylindre (76).

4. Dispositif selon l'une des revendications 2 et 3, caractérisé en ce que la première articulation comprend un premier pivot (72) solidaire du palier (67) et autour duquel est montée pivotante une première bague (73) à laquelle la première extrémité de la tige support (74) est solidarisée, et la second articulation comprend un second pivot (83) solidaire du pendule (1, 3) et autour duquel est montée pivotante une seconde bague (82) à laquelle le fond (75) du cylindre (76) est solidarisé.

5. Dispositif selon la revendication 1, caractérisé en ce que le mécanisme de rappel élastique comprend au moins un ressort (40) de traction ou de compression selon que le pendule (1, 3) n'est pas ou est suspendu, dont une première extrémité est fixée à une patte d'attache (30, 36) montée pivotante par la première articulation (29) sur le palier (17) autour d'un premier axe horizontal, et une tige de support (42, 43, 49, 52) montée pivotante en un premier point fixe (56) par la seconde articulation (57) sur le pendule (1, 3) autour d'un second axe horizontal parallèle au premier, et telle que la seconde extrémité du ou des ressorts (40) est fixée à un second point fixe (45) de la tige de support, disposé de sorte que le second axe horizontal soit situé entre le premier axe horizontal et le second point fixe (45).

6. Dispositif selon la revendication 5, caractérisé en ce que la tige de support a la forme d'une barre en T qui pivote sur le pendule (1, 3) par l'extrémité inférieure de la tige longitudinale (43, 49, 52) du T et dont les deux extrémités de la barre transversale (42) du T sont chacune fixées à la seconde extrémité de l'un de deux ressorts (40), qui sont disposés sensiblement symétriquement d'un côté et de l'autre de la tige longitudinale du T, et dont les premières extrémités sont fixées chacune à l'une des extrémités d'une barre transversale (36) de la patte d'attache (30, 36) également en forme de T, et qui pivote sur le palier (17) par l'extrémité inférieure de son élément longitudinal (30).

7.      Dispositif selon la revendication 6, caractérisé en ce qu'il comprend un stabilisateur, comportant une plaque stabilisatrice (62), solidarisée par une première extrémité sur la patte d'attache (30, 36) et qui s'étend parallèlement à la tige longitudinale (43, 49, 52) de la barre en T de manière à recouvrir la seconde articulation (56, 57) et au moins en partie cette tige longitudinale, et la plaque stabilisatrice (62) porte un élément de guidage (63) que traverse la tige longitudinale.

8.      Dispositif selon la revendication 7, caractérisé en ce que l'élément de guidage est un coulisseau (63) solidaire de la seconde extrémité de la plaque stabilisatrice (62) et monté coulissant sur la tige longitudinale (52).

9.      Dispositif selon l'une des revendications 2 à 8, caractérisé en ce que la tige de support (43, 49, 52, 74) est une tige de longueur utile réglable.

10.      Dispositif selon la revendication 9 telle que rattachée à l'une des revendications 2 à 4, caractérisé en ce que la seconde extrémité de la tige de support (74) est filetée et traverse le piston (78) auquel la tige de support (74) est fixée par un écrou (79) vissé sur cette extrémité filetée et qui permet de régler la longueur utile de la tige support (74).

11.      Dispositif selon la revendication 9 telle que rattachée à l'une des revendications 5 à 8, caractérisé en ce que la tige support comprend deux éléments (47, 50) dans le prolongement l'un de l'autre et dont les extrémités en regard sont filetées et reçues chacune dans l'un de deux alésages taraudés d'extrémité d'un manchon de réglage (49), de sorte que la rotation du manchon (49) dans l'un ou l'autre sens commande l'éloignement ou le rapprochement l'une de l'autre des deux extrémités en regard, reçues dans le manchon (49), des deux éléments (47, 50) de la tige de support (43, 52) dont la longueur utile est ainsi réglable.

12.      Dispositif selon l'une des revendications 1 à 11, caractérisé en ce que la position de la première et/ou de la seconde articulation respectivement sur le palier (17, 67) et sur le pendule (1, 3) est réglable.

13. Dispositif selon la revendication 12, caractérisé en ce que la seconde articulation comprend un pivot (57, 83) solidarisé au pendule (1, 3) par l'intermédiaire d'un patin (58) monté coulissant sur une glissière (59, 88) longitudinale fixée au pendule (1, 3) et sur laquelle le patin (58) est destiné à être immobilisé en position voulue par un mécanisme de serrage (60, 61).

14. Dispositif selon l'une des revendications 1 à 13, caractérisé en ce que le palier (17, 67) comprend une partie supérieure (19, 69) portant la première articulation (29, 72), et montée réglable en position angulaire sur une partie inférieure (18, 68) fixée au support (2) du pendule (1, 3).

15. Dispositif selon la revendication 14, caractérisé en ce que la partie supérieure (19, 69) du palier (17, 67), montée en rotation sur la partie inférieure (18, 68) autour d'un pivot (24) est immobilisée en position angulaire désirée par rapport à la partie inférieure (18, 68) par un mécanisme de serrage (26, 27).

16. Dispositif selon l'une des revendications 1 à 15, caractérisé en ce que la seconde articulation (56, 57) est une articulation à deux degrés de liberté.

Fig.1

0143134

_Fig.2_

_Fig.3_

Fig.4

Fig.5

**Office européen des brevets**

**RAPPORT DE RECHERCHE EUROPEENNE**

0 143 134

Numéro de la demande

EP 83 40 2304

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | | | B 25 J 19/00 |
| X | GB-A-1 585 658 (UNIVERSITY OF SURREY) * Page 2, lignes 25-36 * | 1,5,9, 11 | |
| | --- | | |
| X | FR-A-1 065 600 (SIEMENS-REINIGER-WERKE) * Page 2, colonne 1, lignes 14-58 * | 1-5,12 | |
| | --- | | |
| X | FR-A-1 107 816 (RITTER) * Page 2, colonne 2, ligne 32 - page 3, colonne 1, ligne 21 * | 1,2,4, 5,9,10 | |
| | --- | | |
| X | DE-C- 951 661 (SIEMENS-REINIGER-WERKE) * Page 3, lignes 40-68 * | 1,2,4, 5,9,12 | |
| | --- | | DOMAINES TECHNIQUES RECHERCHES (Int. Cl. 3) |
| A | GB-A-1 100 123 (NATIONAL RESEARCH DEVELOPMENT CORP.) * Figure 2 * | 3 | B 25 J B 66 C B 23 Q A 61 B F 16 F F 16 M G 04 B G 04 F |
| | ----- | | |

Le présent rapport de recherche a été établi pour toutes les revendications

| Lieu de la recherche | Date d'achèvement de la recherche | Examinateur |
|---|---|---|
| LA HAYE | 13-06-1984 | LAMMINEUR P.C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03 82